# EUROPÄISCHE PATENTSCHRIFT

(11) **EP 1 599 691 B1**
(45) Veröffentlichungstag und Bekanntmachung des Hinweises auf die Patenterteilung: **23.05.2007**
(21) Anmeldenummer: 04710774.3
(22) Anmeldetag: 13.02.2004
(51) Int. Cl.: F16L 33/28

(54) **SCHLAUCH MIT EINGEBAUTER KUPPLUNG UND VERFAHREN ZU SEINER HERSTELLUNG**
HOSE WITH INTEGRAL COUPLING AND METHOD FOR PRODUCING THE SAME
TUYAU SOUPLE A RACCORD INTEGRE ET SON PROCEDE DE PRODUCTION

(30) Priorität: 04.03.2003 DE 10309562
(43) Veröffentlichungstag der Anmeldung: 30.11.2005
(73) Patentinhaber: Eddelbüttel + Schneider GmbH, 21079 Hamburg (DE); Phoenix Rubber Industrial Ltd., 6728 Szeged (HU)
(72) Erfinder: BRINK, Burghard, 21224 Rosengarten (DE); NAGY, Tibor, H-1028 Budapest (HU); BOROS, Andras, H-1111 Budapest (HU)
(74) Vertreter: Finger, Karsten
(86) Internationale Anmeldenummer: PCT/DE2004/000267
(87) Internationale Veröffentlichungsnummer: WO 2004/079249

(56) Entgegenhaltungen:
- DE-B- 1 212 371
- US-A- 3 415 545
- US-A- 4 366 842

## Beschreibung

Die Erfindung betrifft einen Schlauch, bestehend wenigstens aus:
- einer Innenschicht aus elastomerem Werkstoff;
- einem eingebetteten Festigkeitsträger aus textilem und/oder metallischem Werkstoff;
- einer Außenschicht aus elastomerem Werkstoff sowie
- einer Kupplung mit Flanschbereich innerhalb des Schlauchendes.

Ein Schlauch mit dem oben genannten Grundaufbar ist beispielsweise in der Patentschrift GB 1 453 999 B und der Offenlegungsschrift DE 40 05 717 A1 beschrieben, und zwar mit einer Kupplungskonstruktion auf der Basis eines Stützflansches und mehrerer Ringlamellen. Ebenfalls einen Schlauch mit diesem Grundaufbar offenbart die Offenlegungsschrift GB 2 272 738 A, wobei die Kupplung hier jedoch aus einem Flansch und einem Nippel besteht.

In der Patentschrift US 4 366 842, die den nächstliegenden Stand der Technik beschreibt, wird ein Schlauch vorgestellt, der in Bezug auf den eingangs genannten Grundaufbau mit folgenden konstruktiven Zusatzmaßnahmen ausgestattet ist:***
- die Kupplung umfasst einen Nippel, einen Stützflansch und Ringlamellen;
- ein erster Festigkeitsträger, der wenigstens aus zwei Verstärkungslagen besteht, läuft an der gesamten Innenseite des Nippels entlang und geht im Flanschbereich von der axialen in die radiale Erstreckungsrichtung über, wobei der radiale Bereich des ersten Festigkeitsträgers zwischen dem Stützflansch und den Ringlamellen befestigt ist;
- ein zweiter Festigkeitsträger, der ebenfalls wenigstens aus zwei Verstärkungseinlagen besteht, erfasst mit seinem Ende die Außenseite des Nippels teilweise oder vollständig;
- ein Füllmaterial aus elastomerem Werkstoff füllt im Bereich des Nippels den Raum zwischen dem ersten und zweiten Festigkeitsträger aus;
- die Kupplung ist so in den Schlauch eingebaut, dass alle mit der Kupplung korrespondierenden Schlauchbauteile einen stoffschlüssigen Schlauch-Kupplungs-Gesamtverbund bilden.

Die Schwachstelle von derartigen Schläuchen ist im Allgerüeinen.der Übergang vom starren zum flexiblen Teil, und zwar unabhängig von den oben genannten Kupplungskonstruktionen.

Die Aufgabe der Erfindung besteht nun darin, einen gattungsgemäßen Schlauch bereitzustellen, bei dem ein glatter Modulübergang vom starren zum flexiblen Teil gewährleistet ist, so dass Druckbelastbarkeit und Lebensdauer des Schlauches erhöht werden. Darüber hinaus soll im Vergleich zu der bisher bekannten Nippelkupplungskonstruktion eine Verkürzung des starren Schlauchteiles ermöglicht werden.

Gelöst wird diese Aufgabe durch einen Schlauch gemäß Kennzeichen des Patentanspruches 1 dadurch, dass
- die Anzahl der Ringlamellen gleich der Anzahl der Verstärkungslagen ist, wobei zwischen zwei Verstärkungslagen eine Ringlamelle angeordnet ist; sowie
- der Schlauch einen zusätzlichen Festigkeitsträger in Form von
   - wenigstens einem Verstärkungsring, der ausschließlich im Bereich des Nippels innerhalb des Füllmaterials angeordnet ist;
      oder
   - mehreren Verstärkungsringen, die zwischen zwei Kupplungen über die Schlauchlänge verteilt angeordnet sind und dabei innerhalb einer Zwischenschicht aus elastomerem Werkstoff, die sich zwischen dem ersten und zweiten Festigkeitsträger befindet, verlaufen, wobei die Zwischenschicht wiederum einen einstückigen Gesamtverbund mit dem Füllmaterial bildet.

Zweckmäßige Gestaltungsvarianten des Schlauches sind in den Patentansprüchen 2 bis 23 genannt.

Darüber hinaus besteht die Aufgabe der Erfindung darin, ein Verfahren zur Herstellung des neuen Schlauches bereitzustellen.

Gemäß Kennzeichen des Patentanspruches 24 zeichnet sich nun das Verfahren des neuen Schlauches mit eingebauter Kupplung durch folgende Verfahrensschritte aus:
- um einen starren Dorn wird die Innenschicht aufgebaut;
- auf die Innenschicht wird dann der erste Festigkeitsträger aufgebracht;
- auf den ersten Festigkeitsträger wird nun die Kupplung, umfassend Nippel, Stützflansch und Ringlamellen, aufgezogen;
- anschließend wird das Füllmaterial eingebracht, und zwar unter Einbau wenigstens eines Verstärkungsringes;
- nun erfolgt das Aufbringen des zweiten Festigkeitsträgers, insbesondere unter gleichzeitiger Verankerung mittels eines Befestigungsmittels an der Außenseite des Nippels;
- anschließend wird die Außenschicht aufgebracht, gegebenenfalls unter Einbau wenigstens eines Spiraldrahtes, einer Textilabdeckung sowie eines Befestigungsmittels für diese Zusatzbauteile;
- abschließend wird vulkanisiert, und zwar unter Bildung eines stoffschlüssigen Schlauch-Kupplung-Gesamtverbundes.

Im Hinblick auf den Einbau der Verstärkungsringe und eines zusätzlichen Spiraldrahtes wird auf die vorteilhaften Verfahrensschritte gemäß Patentanspruch 25 und 26 verwiesen.

Der elastomere Werkstoff der Innenschicht, Außenschicht, des Füllmaterials und der Zwischenschichten umfasst Gummi oder gummiähnlichen Kunststoff, einschließlich thermoplastische Elastomere.

Die Erfindung wird nun anhand von zwei Ausführungsbeispielen unter Bezugnahme auf schematische Zeichnungen erläutert. Es zeigen:
- Fig. 1: einen Schlauch mit eingebauter Kupplung, der neben dem ersten und zweiten Festigkeitsträger zusätzliche Verstärkungsringe, einen Spiraldraht und eine Textilabdeckung aufweist;
- Fig. 2: einen Schlauch mit eingebauter Kupplung sowie mit einem ersten und zweiten Festigkeitsträger und zusätzlichen Verstärkungsringen, wobei der Nippel Öffnungen aufweist.

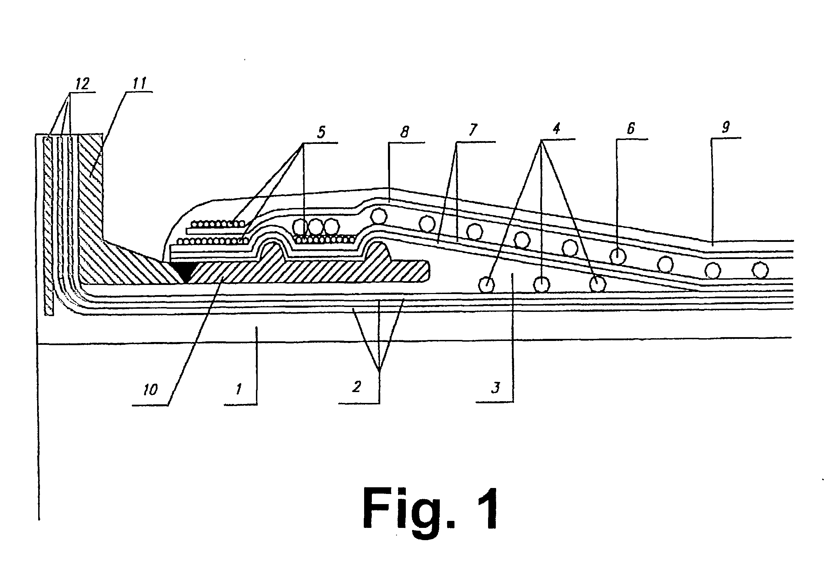

Der Schlauch nach Fig. 1 besteht aus einer Innenschicht 1, die auch als Schlauchseele bezeichnet wird, einem ersten Festigkeitsträger 2, einem Füllmaterial 3, Verstärkungsringen 4, einem Befestigungsmittel 5, einem Spiraldraht 6, einem zweiten Festigkeitsträger 7, einer Textilabdeckung 8, einer Außenschicht 9, die auch als Schlauchdecke bezeichnet wird, ferner einem Nippel 10, der am Stützflansch 11 befestigt ist, und drei Ringlamellen 12. Das Ende des ersten Festigkeitsträgers 2 ist im Flanschbereich zwischen Stützflansch 11 und benachbarter Ringlamelle 12 bzw. zwischen zwei Ringlamellen 12 befestigt. Der zweite Festigkeitsträger 7 ist durch eine Vulkanisationsbindung und/oder durch Bindedraht mit dem Nippel 10 verbunden. Der Schlauchkörper ist ferner durch relativ starre Verstärkungsringe 4 aus Metall; faserverstärktem Kunststoff oder einem anderen geeigneten Material zusätzlich verstärkt. Diese Verstärkungsringe 4 können je nach den Festigkeitsanforderungen entlang des gesamten Schlauches oder nur entlang eines Teils davon angeordnet werden. Bei Bedarf kann der Spiraldraht 6 in den Schlauchkörper oder in einen Teil des Schlauchkörpers eingebaut und mit einer Textilabdeckung 8 bedeckt werden, die wiederum vollständig mit elastomerem Werkstoff ummantelt ist.

Ein derartiger Schlauch hat eine ausgezeichnete Innendruck-Haltekapazität, da der erste Festigkeitsträger 2 als Hauptverstärkung am kleinstmöglichen Durchmesser entlang des gesamten Schlauches vorliegt und im Flanschbereich fest zwischen den Ringlamellen 12 und dem Stützflansch 11 verankert ist. Die Spannung des ersten Festigkeitsträgers 2 ist im Flanschbereich im Vergleich zu dem in der Patentschrift GB 1 453 999 B beschriebenen Schlauch geringer, da sich dieser erste Festigkeitsträger unterhalb des Nippels 11 und des Stützflansches 12 befindet und die Kräfte teilweise auf den Nippel 11 übertragen werden. Der Nippel 11 kann kürzer sein als bei konventionellen Nippelkupplungen, da nur ein Abschnitt der Verstärkung an seiner Außenseite befestigt ist. In einer vorteilhaften Ausgestaltung der Erfindung bedeckt der zweite Festigkeitsträger 7 nicht den gesamten Schlauchkörper, sondern dient lediglich als Halsverstärkung. Ein besonderer Vorteil der Erfindung besteht darin, dass eine Vielzahl verschiedener Halsverstärkungskonstruktionen möglich sind. Es können zusätzliche starre Verstärkungsringe 4 mit verschiedenen Dicken eingebaut werden. Zudem kann der Längsabstand dieser Verstärkungsringe zur Erzielung einer optimalen Biegesteifigkeitsverteilung über die Schlauchlänge variiert werden. Die genannten Konstruktionen dienen als eingebaute Biegeversteifer, so dass ein glatter Modulübergang zur Kupplung oder starren Rohrverbindung erzielt wird.

Ein wesentliches Teilmerkmal der Erfindung ist, dass das Ende des Nippels 10 über dem ersten Festigkeitsträger 2 liegt, so dass die Belastung im elastomeren Werkstoff am Ende des Nippels geringer ist als bei konventionellen Schläuchen. Es ist in der Fachwelt bekannt, dass die kritische Schwachstelle der elastomere Werkstoff am Ende des Nippels bei Schläuchen mit eingebautem Nippel ist.

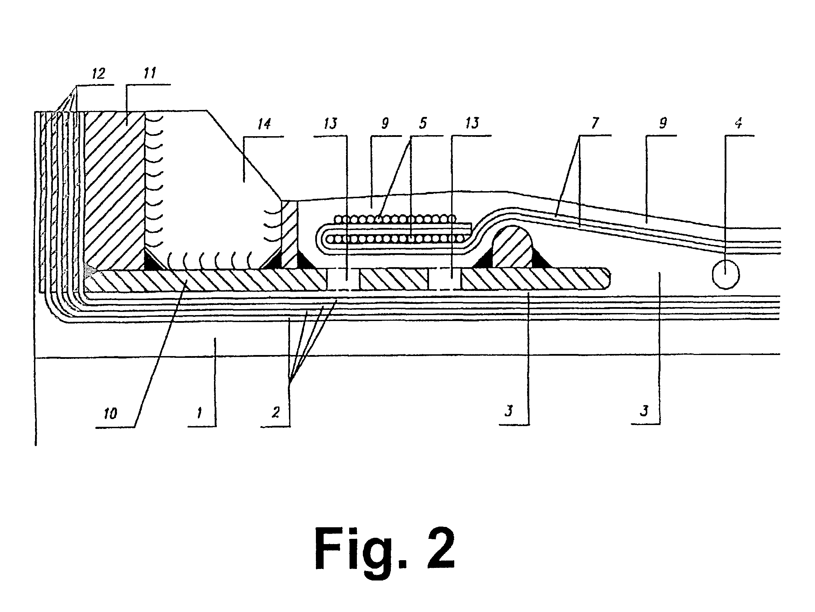

ln einer Ausgestaltung der Erfindung enthält der Nippel **10** mehrere Öffnungen 13 (Fig. 2), beispielsweise runde Bohrungen oder Ausschnitte, so dass das Elastomer während der Vulkanisation zwischen Innen- und Außenseite des Nippels fließen kann, was eine gleichmäßige Druckverteilung im Schlauch während der Vulkanisation gewährleistet.

Nachfolgend wird das Verfahren zur Herstellung des neuen Schlauches beschrieben.

Der Schlauchdorn wird gereinigt und mit einem Trennmittel behandelt. Die Innenschicht 1 wird in einer geringfügig größeren Länge als die vorbestimmte Länge des Schlauches um den Dorn gewickelt. Alternativ kann die Innenschicht auf den Dorn stranggepresst werden. Der erste Festigkeitsträger 2 wird mit einem vorbestimmten Verlegewinkel auf die Innenschicht gelegt. Dieser Festigkeitsträger ist vorzugsweise eine Webware auf der Basis von Cordfäden, die zusätzlich gummiert ist. Der erste Festigkeitsträger 2 wird geringfügig länger gemacht als die endgültige Schlauchlänge. Um das Trennen zu erleichtern, kann eine Nylonhülle oder Siliziumpapier auf einen Abschnitt aufgebracht werden, der sich außerhalb der endgültigen Schläuchlänge befindet. Die benötigten Verstärkungsringe 4 werden lose auf dem Schlauchkörper platziert, vorzugsweise etwa in der Mitte des Schlauches. Der den Nippel 10 und den Stützflansch 11 enthaltende Kupplungsteil wird innerhalb des Kupplungsbereiches auf dem Schlauchkörper angeordnet, so dass die Enden frei bleiben. Der Kupplungsbereich wird mit Füllmaterial 3 bis zu einem Durchmesser gefüllt, der nahezu dem Innendurchmesser des Nippels 10 entspricht. Dann werden der Kupplungsteil mit dem Nippel 10 und der Stützflansch 11 in ihre endgültige Position gezogen. Die freien Enden von einer oder mehreren Verstärkungslagen des ersten Festigkeitsträgers 2 werden nach oben gezogen und gegen die Fläche des Stützflansches **11** gedrückt. Dann wird eine Ringlamelle **12** aufgelegt, und der Vorgang wird so lange wiederholt, bis alle Verstärkungslagen des ersten Festigkeitsträgers 2 zwischen Ringlamellen 12 fixiert sind. Die Frontfläche der letzten Ringlamelle 12 kann bei Bedarf mit elastomerem Werkstoff bedeckt werden. Eine Formplatte (hier nicht dargestellt) wird auf den Stützflansch 11 aufgespannt, um den elastomeren Werkstoff und die Verstärkungslagen zwischen den Ringlamellen 12 und dem Stützflansch 11 unter Druck zu setzen. Die Formplatte kann am Dom befestigt werden. Die Verstärkungsringe 4 werden in ihre endgültige Position bewegt, und die benötigte Menge an Füllmaterial 3 wird eingebracht. Dann wird der zweite Festigkeitsträger 7 aufgebaut.

Der zweite Festigkeitsträger 7 wird mit einem Bindedraht 5 am Nippel 10 befestigt. Bei Bedarf kann ein Spiraldraht 6 aufgelegt und mit einem Befestigungsmittel verankert werden. Die Textilabdeckung 8 und die Außenschicht 9 werden hergestellt. Der Schlauch wird mit Nylon umwickelt und vulkanisiert.

Die vorteilhaften Merkmale eines auf diese Weise hergestellten Schlauches sind besonders bei Großschläuchen von typischerweise mehr als 150 mm Innendurchmesser und im Hochleistungsbereich, beispielsweise bei Nassbaggern sowie Ölabsaugen und Entnahmevorgängen anwendbar. Beispiele sind direkt an Monobojen angebrachte Schläuche, nämlich Bojenabgangsschläuche und Unterbojenschläuche. Weitere Anwendungen sind Bereiche, wo ein Schlauch oder eine Schlauchleitung an starre Rohre angeschlossen ist, beispielsweise Vollkammerabgangsschläuche, Relingschläuche oder Baggerschläuche sowie Schläuche in Wasseransaugsystemen.

In Verbindung mit Fig. 2 wird ein weiteres Ausführungsbeispiel vorgestellt, und zwar unter Angabe von quantitativen Daten, womit jedoch der Umfang der Erfindung nicht begrenzt wird.

Der Innendurchmesser des Schlauches (Mantels) beträgt 800 mm, die Länge 2,2 m für einen Ansaug- und Förderbetrieb. Die Dicke der Innenschicht 1 beträgt 25 mm. Der erste Festigkeitsträger 2 besteht aus einem Schwergewebe auf der Basis von Polyestercorden in einem Verlegewinkel von 45 Grad. Dabei werden insgesamt vier Paare verwendet. Das Ende jedes Paares ist jeweils zwischen Ringlamellen 12 und Stützflansch 11 befestigt. Die insgesamt vier Ringlamellen 12 bestehen aus 4 mm dicken Kohtenstoffstahlplatten. Unter dem Nippel befindet sich eine 5 mm starke Zwischenschicht als Teil des Füllmaterials 3. Der Nippel 10 enthält 24 Bohrungen 13 mit 25 mm Durchmesser, die in Umfangsrichtung in zwei Reihen bei im Wesentlichen gleichmäßigen Abstand verteilt angeordnet sind. Jede Bohrung ist mit elastomerem Werkstoff gefüllt. Insgesamt 15 Verstärkungsringe 4 sind gleichmäßig zwischen den beiden Kupplungen auf den Schlauchkörper verteilt. Der Bereich zwischen diesen Verstärkungsringen ist mit Füllmaterial 3 ausgefüllt. Zwei Paare der Verstärkungslagen des zweiten Festigkeitsträgers 7 bestehen ebenfalls aus einem Schwergewebe der oben genannten Art und sind mit Bindedraht 5 am Nippel befestigt. Der Schlauchkörper ist mit einer Außenschicht 9 in einer Stärke von etwa 10 mm bedeckt. Der Stützflansch 11 ist mit dem Nippel 10 verschweißt und wird von einer Abstützvorrichtung 14 in Form von 8 Abstützplatten aus Stahl getragen, die gleichmäßig über den Umfang verteilt angeordnet sind.

### Bezugszeichenliste

- 1: Innenschicht
- 2: erster Festigkeitsträger (Verstärkungslagen)
- 3: Füllmaterial
- 4: Verstärkungsringe
- 5: Befestigungsmittel (Bindedraht)
- 6: Spiraldraht
- 7: zweiter Festigkeitsträger (Verstärkungslagen)
- 8: Textilabdeckung
- 9: Außenschicht
- 10: Nippel
- 11: Stützflansch
- 12: Ringlamellen
- 13: Öffnung (Bohrungen)
- 14: Abstützvorrichtung (Abstützplatten)

## Patentansprüche

1. Schlauch, bestehend wenigstens aus:
- einer Innenschicht (1) aus elastomerem Werkstoff;
- einem eingebetteten Festigkeitsträger (2, 4, 6, 7) aus textilem und/oder metallischem Werkstoff;
- einer Außenschicht (9) aus elastomerem Werkstoff sowie
- einer Kupplung mit Flanschbereich innerhalb des Schlauchendes;
wobei
- die Kupplung einen Nippel (10), einen Stützflansch (11) und Ringlamellen (12) umfasst;
- ein erster Festigkeitsträger (2), der wenigstens aus zwei Verstärkungslagen besteht, an der gesamten Innenseite des Nippels (10) entlangläuft und im Flanschbereich von der axialen in die radiale Erstreckungsrichtung übergeht,
wobei der radiale Bereich des ersten Festigkeitsträgers (2) zwischen dem Stützflansch (11) und den Ringlamellen (12) befestigt ist;
- ein zweiter Festigkeitsträger (7), der ebenfalls wenigstens aus zwei Verstärkungslagen besteht, mit seinem Ende die Außenseite des Nippels (10) teilweise oder vollständig erfasst;
- ein Füllmaterial (3) aus elastomerem Werkstoff im Bereich des Nippels (10) den Raum zwischen dem ersten und zweiten Festigkeitsträger (2, 7) ausfüllt sowie
- die Kupplung so in den Schlauch eingebaut ist, dass alle mit der Kupplung korrespondierenden Schlauchbauteile einen stoffschlüssigen Schlauch-Kupplung-Gesamtverbund bilden;
**dadurch gekennzeichnet, dass**
- die Anzahl der Ringlamellen (12) gleich der Anzahl der Verstärkungslagen ist,
wobei zwischen zwei Verstärkungslagen eine Ringlamelle angeordnet ist; sowie
- der Schlauch einen zusätzlichen Festigkeitsträger in Form von
• wenigstens einem Verstärkungsring (4), der ausschließlich im Bereich des Nippels (10) innerhalb des Füllmaterials (3) angeordnet ist;
oder
• mehreren Verstärkungsringen (4), die zwischen zwei Kupplungen über die Schlauchlänge verteilt angeordnet sind und dabei innerhalb einer Zwischenschicht aus elastomerem Werkstoff, die sich zwischen dem ersten und zweiten Festigkeitsträger (2, 7) befindet, verlaufen, wobei die Zwischenschicht wiederum einen einstückigen Gesamtverbund mit dem Füllmaterial (3) bildet.

2. Schlauch nach Anspruch 1, **dadurch gekennzeichnet, dass** der erste Festigkeitsträger (2) aus zwei bis vier Verstärkungslagen besteht.

3. Schlauch nach Anspruch 1 oder 2, **dadurch gekennzeichnet, dass** die Ringlamelle (12) eine Platte ist, die aus Stahl oder einem Werkstoff mit ähnlichen Festigkeitseigenschaften besteht.

4. Schlauch nach Anspruch 3, **dadurch gekennzeichnet, dass** die Ringlamelle (12) eine Kohlenstoffstahlplatte ist.

5. Schlauch nach einem der Ansprüche 1 bis 4, **dadurch gekennzeichnet, dass** zwischen dem ersten Festigkeitsträger (2) und der Innenseite des Nippels (10) eine Zwischenschicht aus elastomerem Werkstoff vorhanden ist, die einen einstückigen Gesamtverbund mit dem Füllmaterial (3) bildet.

6. Schlauch nach einem der Ansprüche 1 bis 5, **dadurch gekennzeichnet, dass** der zweite Festigkeitsträger (7) mittels eines Befestigungsmittels (5) an der Außenseite des Nippels (10) verankert ist.

7. Schlauch nach Anspruch 6, **dadurch gekennzeichnet, dass** das Befestigungsmittel (5) aus einem Bindedraht besteht.

8. Schlauch nach Anspruch 6 oder 7, **dadurch gekennzeichnet, dass** das Ende des zweiten Festigkeitsträgers (7) das Befestigungsmittel (5) ganz oder teilweise umschlingt.

9. Schlauch nach einem der Ansprüche 1 bis 8, **dadurch gekennzeichnet, dass** der Nippel (10) an seiner Außenseite mit wenigstens einem ringförmig verlaufenden Vorsprung ausgestattet ist.

10. Schlauch nach einem der Ansprüche 1 bis 9, **dadurch gekennzeichnet, dass** der Nippel (10) wenigstens eine Öffnung (13), beispielsweise in Form von runden Bohrungen oder Ausschnitten, aufweist, die von der Außenseite des Nippels zu dessen Innenseite verläuft.

11. Schlauch nach Anspruch 10, **dadurch gekennzeichnet, dass** mehrere Öffnungen (13) vorhanden sind, die in Umfangsrichtung des Nippels (10) verteilt angeordnet sind.

12. Schlauch nach einem der Ansprüche 1 bis 11, **dadurch gekennzeichnet, dass** der erste und zweite Festigkeitsträger (2, 7) aus einem Gewebe, insbesondere Schwergewebe, besteht.

13. Schlauch nach Anspruch 12, **dadurch gekennzeichnet, dass** die Gewebefäden, insbesondere in Form von Corden oder Seilen, aus Polyester bestehen.

14. Schlauch nach einem der Ansprüche 1 bis 13, **dadurch gekennzeichnet, dass** der zweite Festigkeitsträger (7) nicht den gesamten Schlauchkörper erfasst, sondern als Halsverstärkung dient.

15. Schlauch nach einem der Ansprüche 1 bis 14, **dadurch gekennzeichnet, dass** der Verstärkungsring (4) aus Metall, faserverstärktem Kunststoff oder einem Material mit ähnlichen Festigkeitseigenschaften besteht.

16. Schlauch nach einem der Ansprüche 1 bis 15, **dadurch gekennzeichnet, dass** dieser einen zusätzlichen Festigkeitsträger in Form wenigstens eines Spiraldrahtes (6) aufweist,
wobei der Spiraldraht den Schlauch vollständig oder absatzweise erfasst.

17. Schlauch nach Anspruch 16, **dadurch gekennzeichnet, dass** der Spiraldraht (6) aus Metall besteht.

18. Schlauch nach Anspruch 16 oder 17, **dadurch gekennzeichnet, dass** der Spiraldraht (6) oberhalb des zweiten Festigkeitsträgers (7) verläuft, vorzugsweise im direktem Kontakt mit diesem.

19. Schlauch nach einem der Ansprüche 16 bis 18, **dadurch gekennzeichnet, dass** der Spiraldraht (6) mit einer Textilabdeckung (8) versehen ist.

20. Schlauch nach Anspruch 19, **dadurch gekennzeichnet, dass** die Textilabdeckung (8) innerhalb derAußenschicht (9) angeordnet ist, so dass die Textilabdeckung vollständig mit elastomerem Werkstoff ummantelt ist.

21. Schlauch nach Anspruch 19 oder 20, **dadurch gekennzeichnet, dass** die Textilabdeckung (8) mittels eines Befestigungsmittels (5), vorzugsweise in Form eines Bindedrahtes, am Nippel (10) verankert ist.

22. Schlauch nach einem der Ansprüche 1 bis 21, **dadurch gekennzeichnet, dass** der Nippel (10) und der Stützflansch (11) miteinander verschweißt sind.

23. Schlauch nach einem der Ansprüche 1 bis 22, **dadurch gekennzeichnet, dass** der Stützflansch (11) mit einer Abstützvorrichtung (14) versehen ist, vorzugsweise in Form mehrerer Abstützplatten, die gleichmäßig über den Umfang verteilt angeordnet sind.

24. Verfahren zur Herstellung eines Schlauches mit eingebauter Kupplung nach einem der Ansprüche 1 bis 23, **gekennzeichnet durch** folgende Verfahrensschritte:
- um einen starren Dorn wird die Innenschicht (1) aufgebaut;
- auf die Innenschicht (1) wird dann der erste Festigkeitsträger (2) aufgebracht;
- auf den ersten Festigkeitsträger (2) wird nun die Kupplung, umfassend Nippel (10), Stützflansch (11) und Ringlamellen (12), aufgezogen;
- anschließend wird das Füllmaterial (3) eingebracht, und zwar unter Einbau wenigstens eines Verstärkungsringes (4);
- nun erfolgt das Aufbringen des zweiten Festigkeitsträgers (7), insbesondere unter gleichzeitiger Verankerung mittels eines Befestigungsmittels (5) an der Außenseite des Nippels (10);
- anschließend wird die Außenschicht (9) aufgebracht, gegebenenfalls unter Einbau wenigstens eines Spiraldrahtes (6), einer Textilabdeckung (8) sowie eines Befestigungsmittels (5) für diese Zusatzbauteile;
- abschließend wird vulkanisiert, und zwar unter Bildung eines stoffschlüssigen Schlauch-Kupplung-Gesamtverbundes.

25. Verfahren nach Anspruch 24, **dadurch gekennzeichnet, dass** der/die Verstärkungsring/e (4) auf den ersten Festigkeitsträger (2) gelegt wird/werden, bevor die Kupplung aufgezogen wird.

26. Verfahren nach Anspruch 24 oder 25, **dadurch gekennzeichnet, dass** der Spiraldraht (6) so aufgebracht wird, dass eine Befestigung des Spiraldrahtes über dem Nippel (10) erfolgt.

## Claims

1. Hose comprising at least:
- an inner layer (1) of elastomeric material;
- an embedded reinforcement (2, 4, 6, 7) of textile and/or metal material;
- an outer layer (9) of elastomeric material, and
- a coupling with flange region within the hose end;
wherein
- the coupling comprises a nipple (10), a supporting flange (11) and annular lamellae;
- a first reinforcement (2), which comprises at least two reinforcing layers, runs along the entire inner side of the nipple (10) and makes a transition from the axial to the radial direction of extension in the flange region, the radial region of the first reinforcement (2) being fastened between the supporting flange (11) and the annular lamellae (12);
- a second reinforcement (7), which likewise comprises at least two reinforcing layers, has its end partially or completely gripping the outer side of the nipple (10);
- a filler material (3) of elastomeric material fills the space between the first and second reinforcements (2, 7) in the region of the nipple (10); and
- the coupling is integrated into the hose in such a way that all of the hose components associated with the coupling form an integral hose/coupling composite system;
**characterized in that**
- the number of annular lamellae (12) is equal to the number of reinforcing layers, with one annular lamella being arranged between two reinforcing layers; and
- the hose comprises an additional reinforcement in the form of
• at least one reinforcing ring (4), which is arranged within the filler material (3) exclusively in the region of the nipple (10);
or
• a plurality of reinforcing rings (4), which are arranged with a distribution over the hose length between two couplings and in this case extend within an intermediate layer of elastomeric material which is situated between the first and second reinforcements (2, 7), the intermediate layer in turn forming a one-piece composite system with the filler material (3).

2. Hose according to Claim 1, **characterized in that** the first reinforcement (2) comprises from two to four reinforcing layers.

3. Hose according to Claim 1 or 2, **characterized in that** the annular lamella (12) is a plate which consists of steel or a material having similar strength properties.

4. Hose according to Claim 3, **characterized in that** the annular lamella (12) is a carbon steel plate.

5. Hose according to one of Claims 1 to 4,
**characterized in that** an intermediate layer of elastomeric material is present between the first reinforcement (2) and the inner side of the nipple (10), this intermediate layer forming a one-piece composite system with the filler material (3).

6. Hose according to one of Claims 1 to 5,
**characterized in that** the second reinforcement (7) is anchored on the outer side of the nipple (10) by way of a fastening means (5).

7. Hose according to Claim 6, **characterized in that** the fastening means (5) comprises a binding wire.

8. Hose according to Claim 6 or 7, **characterized in that** the end of the second reinforcement (7) partially or completely encloses the fastening means (5).

9. Hose according to one of Claims 1 to 8,
**characterized in that** the nipple (10) is equipped on its outer side with at least one annularly extending projection.

10. Hose according to one of Claims 1 to 9,
**characterized in that** the nipple (10) has at least one opening (13), for example in the form of round bores or cutouts, which extends from the outer side of the nipple to its inner side.

11. Hose according to Claim 10, **characterized in that** there are a plurality of openings (13) which are arranged with a distribution in the circumferential direction of the nipple (10).

12. Hose according to one of Claims 1 to 11,
**characterized in that** the first and second reinforcements (2, 7) consist of a woven fabric, in particular a heavy woven fabric.

13. Hose according to Claim 12, **characterized in that** the fabric filaments, in particular in the form of cords or ropes, consist of polyester.

14. Hose according to one of Claims 1 to 13,
**characterized in that** the second reinforcement (7) does not encompass the entire hose body, but serves as a neck reinforcement.

15. Hose according to one of Claims 1 to 14,
**characterized in that** the reinforcing ring (4) consists of metal, fibre-reinforced plastic or a material having similar strength properties.

16. Hose according to one of Claims 1 to 15,
**characterized in that** it comprises an additional reinforcement in the form of at least one spiral wire (6), the spiral wire encompassing the hose completely or in sections.

17. Hose according to Claim 16, **characterized in that** the spiral wire (6) consists of metal.

18. Hose according to Claim 16 or 17, **characterized in that** the spiral wire (6) extends above the second reinforcement (7), preferably in direct contact with the latter.

19. Hose according to one of Claims 16 to 18,
**characterized in that** the spiral wire (6) is provided with a textile covering (8).

20. Hose according to Claim 19, **characterized in that** the textile covering (8) is arranged within the outer layer (9) such that the textile covering is completely encased with elastomeric material.

21. Hose according to Claim 19 or 20, **characterized in that** the textile covering (8) is anchored on the nipple (10) by way of a fastening means (5), preferably in the form of a binding wire.

22. Hose according to one of Claims 1 to 21,
**characterized in that** the nipple (10) and the supporting flange (11) are welded together.

23. Hose according to one of Claims 1 to 22,
**characterized in that** the supporting flange (11) is provided with a support device (14), preferably in the form of a plurality of support plates which are arranged with a uniform distribution over the circumference.

24. Method for producing a hose with integral coupling according to one of Claims 1 to 23, **characterized by** the following method steps:
- the inner layer (1) is built up around a rigid mandrel;
- the first reinforcement (2) is then applied to the inner layer (1);
- the coupling, comprising nipple (10), supporting flange (11) and annular lamellae (12), is now drawn onto the first reinforcement (2);
- next, the filler material (3) is introduced, specifically with the inclusion of at least one reinforcing ring (4);
- the application of the second reinforcement (7) now takes place, in particular with the simultaneous anchoring by way of a fastening means (5) on the outer side of the nipple (10);
- next, the outer layer (9) is applied, if appropriate with the inclusion of at least one spiral wire (6), a textile covering (8) and a fastening means (5) for these additional components;
- finally, vulcanization takes place, specifically with the formation of an integral hose/coupling composite system.

25. Method according to Claim 24, **characterized in that** the reinforcing ring or rings (4) is or are placed on the first reinforcement (2) before the coupling is drawn on.

26. Method according to Claim 24 or 25, **characterized in that** the spiral wire (6) is applied in such a way that the spiral wire is fastened above the nipple (10).

## Revendications

1. Tuyau souple composé au moins .
- d'une couche intérieure (1) en matériau élastomère ;
- d'un support de résistance intégré (2, 4, 6, 7) en matériau textile et/ou métallique ;
- d'une couche extérieure (9) en matériau élastomère ainsi que
- d'un dispositif d'accouplement avec une zone bridée à l'intérieur de l'extrémité du tuyau ;
- le dispositif d'accouplement comprenant un manchon fileté (10), une bride d'appui (11) et des lamelles annulaires (12) ;
- un premier support de résistance (2), qui est composé d'au moins deux couches de renfort, s'étendant le long de l'ensemble du côté intérieur du manchon fileté (10) et passant du sens de développement axial au sens de développement radial dans la zone bridée, la zone radiale du premier support de résistance (2) étant fixée entre la bride d'appui (11) et les lamelles annulaires (12);
- un deuxième support de résistance (7), qui est également composé d'au moins deux couches de renfort, englobant partiellement ou complètement avec son extrémité le côté extérieur du manchon fileté (10) ;
- une substance de remplissage (3) en matériau élastomère remplissant, dans la zone du manchon fileté (10), l'espace entre le premier support de résistance et le deuxième support de résistance (2, 7) ainsi que
- le dispositif d'accouplement étant intégré de telle sorte dans le tuyau que tous les composants du tuyau correspondant au dispositif d'accouplement forment un composite complet tuyau-dispositif d'accouplement par liaison de matière ;
**caractérisé en ce que**
- le nombre de lamelles annulaires (12) est égal au nombre de couches de renfort, une lamelle annulaire étant disposée entre deux couches de renfort ; et
- le tuyau souple comprend un support de résistance supplémentaire ayant la forme de
* au moins une bague de renfort (4), qui est disposée exclusivement dans la zone du manchon fileté (10) à l'intérieur de la substance de remplissage (3) ;
ou
* plusieurs bagues de renfort (4) qui sont disposées entre deux dispositifs d'accouplement en étant réparties uniformément sur la longueur du tuyau souple et s'étendent à l'intérieur d'une couche intermédiaire en matériau élastomère, qui se trouve entre le premier support de résistance et le deuxième support de résistance (2, 7), la couche intermédiaire formant à son tour un composite complet monobloc avec la substance de remplissage (3).

2. Tuyau souple selon la revendication 1,
**caractérisé en ce que** le premier support de résistance (2) est composé de deux à quatre couches de renfort.

3. Tuyau souple selon la revendication 1 ou 2,
**caractérisé en ce que** la lamelle annulaire (12) est une plaque qui est en acier ou constituée d'un matériau aux propriétés de solidité similaires.

4. Tuyau souple selon la revendication 3,
**caractérisé en ce que** la lamelle annulaire (12) est une plaque en acier au carbone.

5. Tuyau souple selon l'une quelconque des revendications 1 à 4, **caractérisé en ce qu'**une couche intermédiaire en matériau élastomère est présente entre le premier support de résistance (2) et le côté intérieur du manchon fileté (10), laquelle couche forme un composite complet monobloc avec la substance de remplissage (3).

6. Tuyau souple selon l'une quelconque des revendications 1 à 5, **caractérisé en ce que** le deuxième support de résistance (7) est ancré au côté extérieur du manchon fileté (10) par l'intermédiaire d'un moyen de fixation (5).

7. Tuyau souple selon la revendication 6,
**caractérisé en ce que** le moyen de fixation (5) est constitué par un fil d'attache.

8. Tuyau souple selon la revendication 6 ou 7,
**caractérisé en ce que** l'extrémité du deuxième support de résistance (7) enlace complètement ou partiellement le moyen de fixation (5).

9. Tuyau souple selon l'une quelconque des revendications 1 à 8, **caractérisé en ce que** le manchon fileté (10) est doté sur son côté extérieur d'au moins une saillie de forme annulaire.

10. Tuyau souple selon l'une quelconque des revendications 1 à 9, **caractérisé en ce que** le manchon fileté (10) présente au moins un orifice (13), par exemple en forme de perçages ou de découpes rond(e)s, qui s'étend du côté extérieur du manchon fileté vers son côté intérieur.

11. Tuyau souple selon la revendication 10,
**caractérisé en ce qu'**il existe plusieurs orifices (13) qui sont répartis dans le sens périphérique du manchon fileté (10).

12. Tuyau souple selon l'une quelconque des revendications 1 à 11, **caractérisé en ce que** le premier support de résistance et le deuxième support de résistance (2, 7) est constitué d'un tissu, en particulier d'un tissu lourd.

13. Tuyau souple selon la revendication 12,
**caractérisé en ce que** les fils de tissu, en particulier en forme de cordes ou de cordages, sont en polyester.

14. Tuyau souple selon l'une quelconque des revendications 1 à 13, **caractérisé en ce que** le deuxième support de résistance (7) n'englobe pas le corps complet du tuyau, mais sert de renfort du col.

15. Tuyau souple selon l'une quelconque des revendications 1 à 14, **caractérisé en ce que** la bague de renfort (4) est constituée d'un métal, d'une matière plastique renforcée par fibres ou d'un matériau ayant des propriétés de solidité similaires.

16. Tuyau souple selon l'une quelconque des revendications 1 à 15, **caractérisé en ce que** celui-ci présente un support de résistance supplémentaire ayant la forme d'au moins un fil en spirale (6), le fil en spirale englobant le tuyau souple complètement ou par intervalles.

17. Tuyau souple selon la revendication 16,
**caractérisé en ce que** le fil en spirale (6) est en métal.

18. Tuyau souple selon la revendication 16 ou 17,
**caractérisé en ce que** le fil en spirale (6) s'étend au-dessus du deuxième support de résistance (7), de préférence en contact direct avec celui-ci.

19. Tuyau souple selon l'une quelconque des revendications 16 à 1.8, **caractérisé en ce que** le fil en spirale (6) est doté d'un revêtement textile (8).

20. Tuyau souple selon la revendication 19,
**caractérisé en ce que** le revêtement textile (8) est disposé à l'intérieur de la couche extérieure (9), si bien que le revêtement textile est entièrement enveloppé de matériau élastomère.

21. Tuyau souple selon la revendication 19 ou 20,
**caractérisé en ce que** le revêtement textile (8) est ancré au manchon fileté (10) par l'intermédiaire d'un moyen de fixation (5), ayant de préférence la forme d'un fil d'attache.

22. Tuyau souple selon l'une quelconque des revendications 1 à 21, **caractérisé en ce que** le manchon fileté (10) et la bride d'appui (11) sont soudés l'un à l'autre.

23. Tuyau souple selon l'une quelconque des revendications 1 à 22, **caractérisé en ce que** la bride d'appui (11) est dotée d'un dispositif d'appui (14), ayant de préférence la forme de plusieurs plaques d'appui qui sont réparties régulièrement sur la périphérie.

24. Procédé de fabrication d'un tuyau souple avec un dispositif d'accouplement intégré selon l'une quelconque des revendications 1 à 23, **caractérisé par** les étapes suivantes:
- la couche intérieure (1) est constituée sur un mandrin rigide ;
- le premier support de résistance (2) est ensuite appliqué sur la couche intérieure (1) ;
- le dispositif d'accouplement, comprenant le manchon fileté (10), une bride d'appui (11) et des lamelles annulaires (12), est alors monté sur le premier support de résistance (2) ;
- la substance de remplissage (3) est ensuite introduite, et ce en montant au moins une bague de renfort (4) ;
- l'application du deuxième support de résistance (7) a alors lieu, avec notamment un ancrage simultané au côté extérieur du manchon fileté (10) par l'intermédiaire d'un moyen de fixation (5) ;
- la couche extérieure (9) est ensuite appliquée, le cas échéant en montant au moins un fil en spirale (6), un revêtement textile (8) ainsi qu'un moyen de fixation (5) pour ces composants supplémentaires ;
- l'étape finale est la vulcanisation, avec la formation d'un composite complet tuyau-dispositif d'accouplement par liaison de matière.

25. Procédé selon la revendication 24, **caractérisé en ce que** la/les bague(s) de renfort (4) est/sont posée(s) sur le premier support de résistance (2) avant que le dispositif d'accouplement soit monté.

26. Procédé selon la revendication 24 ou 25,
**caractérisé en ce que** le fil en spirale (6) est appliqué de telle manière qu'une fixation du fil en spirale (6) s'effectue au-dessus du manchon fileté (10).
